# EUROPÄISCHE PATENTSCHRIFT

(11) **EP 0 776 841 B1**
(45) Veröffentlichungstag und Bekanntmachung des Hinweises auf die Patenterteilung: **02.06.1999**
(21) Anmeldenummer: 95118916.6
(22) Anmeldetag: 01.12.1995
(51) Int. Cl.: B65G 47/26

(54) **Transportbahn für Stückgüter und Paletten**
Transporting device for piece goods and pallets
Transporteur pour marchandises de détail et palettes

(43) Veröffentlichungstag der Anmeldung: 04.06.1997
(73) Patentinhaber: IBF FÖRDERTECHNIK IRMHILD HELGA FLOHR-CLEMENS, 63825 Blankenbach (DE)
(72) Erfinder: Clemens, Horst G., Dipl.-Ing., D-63825 Blankenbach (DE)
(74) Vertreter: Pöhner, Wilfried Anton, Dr.

(56) Entgegenhaltungen:
- DE-A- 2 727 638
- DE-A- 3 120 939
- DE-A- 3 442 978
- DE-A- 3 612 021
- US-A- 3 034 637
- HOLZ ALS ROH- UND WERKSTOFF, Bd. 48, Nr. 10, Oktober 1990, BERLIN, DE, Seite 400 XP000109922 "Stau-Kettenförderer"

## Beschreibung

Die Erfindung bezieht sich auf eine Transportbahn für Stückgüter und Paletten zur staudrucklosen Förderung, bestehend aus einer mit einem Antrieb versehenen Fördervorrichtung, die Stückgüter fortbewegt, und einer Abbremsvorrichtung, die die Förderung in einem bestimmten Bremsabschnitt der Transportbahn bei Aktivierung eines diesem Bremsabschnitt zugeordneten Sensors (insbesondere eines mechanischen Tasters) unterbindet, wobei die Transportbahn zumindest im Bereich von Gestelle fortlaufende Aufnahmeleisten in einer solchen Höhe aufweist, daß das Stückgut im abgesenkten Zustand des Gestells aufsitzt und im angehobenen Zustand einen Abstand zu den Aufnahmeleisten aufweist und die Abbremsvorrichtung bei Aktivierung des Sensors die Gestelle des Bremsabschnittes absenkt und die Fördervorrichtung drehbare Walzen aufweist, die zumindest teilweise mit dem Antrieb in Verbindung stehen.

Transportbahnen bestehen in der Regel aus einer Vielzahl in Reihe hintereinander und quer zur Transportrichtung drehbar angeordneter Walzen, die zumindest teilweise mit einem Antrieb in Verbindung stehen. Die in Kisten oder Kartons verpackten Stückgüter bewegen sich sukzessive, durch die verschiedenen Walzen getragen, entlang der Transportbahn, wobei der Abstand benachbarter Walzen naturgemäß wesentlich geringer als die Abmessung des Stückgutes in Transportrichtung sein muß. Die Möglichkeit der Abbremsung ergibt sich aus dem Aufbau der Walze: Koaxial zur Walze verläuft die angetrieben Achse; auf ihr befindet sich die mit dem Antrieb in Reibschluß (Friktion) in Verbindung stehende Walze. Wenn nun die Walze mit hinreichender Kraft eine Fixierung erfährt, wird der Reibschluß überschritten und es folgt eine Entkoppelung, mit der Folge, daß sich die angetriebene Achse bei nunmehr raumfester Walze weiterdreht. Von außen betrachtet kommt die Walze zum Stillstand und der auf das nachfolgende Stückgut einwirkende Vorschub wird unterbrochen und die Förderbewegung kommt zu einem Stillstand. Aus der DE-OS 2727638 sind Fördervorrichtungen bekannt, bei denen zum Abbremsen oder Transportieren ein Anheben oder Absenken des Stückgutes erfolgt. Um Kollisionen benachbarter Stückgüter abzuschwächen, werden Sensoren eingesetzt, die eine Abbremsung dann auslösen, wenn der Vorbeitransport eines einzelnen Stückgutes länger dauert als üblich. Der Aufprall wird in seiner Wucht verringert jedoch nicht gänzlich ausgeschaltet, da im Falle der Verlangsamung, also bei bereits bestehendem gegenseitigen Kontakt der Abbremsvorgang einsetzt.

Hiervon ausgehend hat sich die Erfindung die Aufgabe gestellt, bei Transportbahnen für Stückgüter mit Steigungsstrecken zur Verminderung der Geräuschentwicklung und von Reibungsverlusten ein Auflaufen und Kollidieren von Stückgütern untereinander zu unterbinden.

Gelöst wird diese Aufgabe erfindungsgemäß dadurch, daß die Fördervorrichtung mindestens einen in Förderrichtung verlaufenden Zahnriemen aufweist, die Walzen abschnittsweise in den einzelnen, absenkbaren Gestellen untergebracht sind, die angetriebenen Walzen Zahnräder sind, und der Sensor aktiviert ist, solange sich ein Stückgut in einem mindestens um die Länge des Stückgutes beabstandeten, in Förderrichtung nachfolgenden Steuerabschnitt der Transportbahn befindet.

Der prinzipielle Aufbau der Transportbahn ist wie folgt: Zumindest ein Zahnriemen läuft ohne Vorspannung in Längsrichtung der Transportbahn und wird über einzelne Walzen angetrieben. Die Stützung erfährt der Riemen durch im Abstand angebrachte Walzen, welche ihrerseits abschnittsweise in einzelnen Gestellen drehbar untergebracht sind, die wiederum ihrerseits über Hebelgestänge absenkbar sind. Seitlich der Riemen und unterhalb der Transportbahn verlaufen Aufnahmeleisten in einer solchen Höhe, daß sie im Transportzustand unterhalb der durch die Oberfläche der Riemen definierten Ebene zu liegen kommen. Erfolgt hingegen ein Absenken der Walzen und damit des Riemens, befindet sich die durch die Leiste definierte Ebene nunmehr oberhalb der Walzen. Das Ergebnis ist, daß das auf den Zahnriemen aufsitzende Transportgut bei Absenken der Walzen den Kontakt zu den Riemen verliert, auf den Leisten aufsitzt und hierdurch abgebremst wird. Riemen und Walzen bewegen sich jedoch weiter. Zusammenfassend läßt sich angeben, daß die Bewegung des Transportgutes in Transportrichtung mit Hilfe eines Riemens erfolgt und das Abbremsen dadurch geschieht, daß die Walzen und dadurch somit auch der Riemen abschnittsweise abgesenkt wird und dadurch das Transportgut auf parallel geführten Leisten aufzuliegen kommt. Der Abstand der Walzen ist so zu wählen, daß das Stückgut im Hinblick auf seine Länge in Transportrichtung mehrfache Unterstützung erfährt. Zur staudrucklosen Förderung werden Vorkehrungen getroffen, daß im Falle des Staus des Materialflußes die benachbarten Stückgüter nicht sukzessive aufeinander auflaufen sondern auch in diesem Betriebszustand ein Abstand zwischen benachbarten Stückgütern gewahrt bleibt. Hierzu wird ein in die Bewegungsbahn des Stückgutes eingreifender Taster angeordnet, der durch die translatorische Bewegung des Stückgutes bei Erreichen dieses Punktes betätigt wird und hierdurch eine Walze in Transportrichtung vor dem Taster abbremst, wobei der Abstand zwischen Taster und abgebremster Walze größer als die Abmessung des Stückgutes in Transportrichtung ist. Die fixierte Walze bewirkt, daß das dem den Taster bewegende Stückgut nachfolgenden Transportgut nicht mehr weiterbewegt wird und in dieser Position verharrt. Ein Auflaufen oder gar eine Kollision mit dem voranlaufenden Stückgut ist mit Sicherheit ausgeschlossen. Das Abbremsen hat wie an sich bekannt durch Taster zu erfolgen, die einen Mindestabstand benachbarter Behälter von 20 bis 50 mm garantieren. Die Länge des die Walzen absenkenden Gestells entspricht etwa der Behälterlänge.

Der Vorteil der Erfindung gegenüber dem Stande der Technik besteht primär darin, daß Kollisionen benachbarter Stückgüter mit Sicherheit ausgeschlossen sind; demzufolge reduziert sich die Geräuschentwicklung erheblich. Ein weiterer Vorzug besteht in der Verwendung von Zahnriemen, so daß die erfindungsgemäße Transportbahn auch für ansteigende Strecken eingesetzt werden kann. Es ist ausgeschlossen, daß aufgrund einer tangential zur Transportbahn gerichteten Kraftkomponente das Transportgut entgegen der Transportrichtung zurückläuft. Weiterhin ist der Aufbau einfach und ohne Verschleißteile möglich, mit dem Ergebnis einer langandauernden hohen Betriebssicherheit. Die ununterbrochene Bewegung von Riemen und Walzen auch bei abgesetztem Transportgut bedeutet zudem eine erhebliche Energieersparnis, da sie bei einer Wiederaufnahme des Transportvorganges nicht erneut beschleunigt werden müssen.

Der Riemen ist als Zahnriemen ausgebildet und die mit dem Antrieb in Verbindung stehenden Walzen sind folgerichtig als Zahnräder ausgebildet, die mit dem Zahnriemen zusammenarbeiten. Steigungsstrecken können dann ohne Einschränkungen realisiert werden.

Zweckmäßigerweise erstreckt sich nur jeweils ein Gestell in einem Bremsabschnitt. Eine Trennung in mehrere Gestelle ist unnötig, da ohnehin alle Gestelle eines Bremsabschnitts abgesenkt werden müßten.

Das Gestell kann auf unterschiedliche Art und Weise abgesenkt werden. In der einen denkbaren Alternative ist das Gestell an einem Ende schwenkbar befestigt und wird infolge der Betätigung des Tasters durch das voranlaufende Stückgut in Form einer Schwenkbewegung abgesenkt. In einer Alternative erfolgt ein paralleles Absenken des gesamten Gestells.

Die Aufwärtsbewegung des Gestells erfordert gleichzeitig auch ein Anheben des darauf befindlichen Stückgutes. Die Aufbringung der mitunter erheblichen Kräfte erfolgt in einer bevorzugten Ausgestaltung dadurch, daß ein Bolzen zwischen die Zähne des Zahnriemens eingreift, der aufgrund der Bewegung des Zahnriemens eine Schwenkbewegung vollführt und hierbei das Gestell aufwärts bewegt. Im Ergebnis wird durch den Zahnriemen das Gestell nach oben bewegt. Da die Hebestrecke vergleichsweise kurz ist, kann der Antrieb durch die translatorische Bewegung des Zahnriemens, die auf den eine kreisförmige Bewegung ausführenden und das Hebegestänge antreibenden Bolzen übertragen wird, erfolgen.

Die für das Anheben des sich im abgesenkten Zustand befindlichen Gestelles aufzuwendenden Kräfte könnte nach entsprechender Ansteuerung über einen pneumatischen oder einen elektrischen Zylinder aufgebracht werden, der seinerseits über ein Hebelgestänge auf die Hebemechanik des Gestelles einwirkt.

Alternativ ist es möglich, die hierfür erforderlichen Kräfte aus der Bewegung des Riemens oder durch das Gewicht des Fördergutes herzuleiten. Im ersteren Fall wird durch Zugriff auf den bewegten Zahnriemen ein Hebel umgelegt, der über ein entsprechendes Gestänge zum Anheben des Gestelles führt.

Aber auch das Gewicht des Fördergutes selbst kann hierzu genutzt werden. Im Falle einer statischen Lösung wird durch das Eigengewicht des Fördergutes das Anheben ausgelöst. Im Falle einer dynamischen Alternative wird die Kraft aus der Bewegung des Fördergutes in Förderrichtung abgeleitet, d.h. die Bewegung des Fördergutes wirkt auf einen das Anheben des Gestelles bewirkenden Hebel ein. Der Vorteil der vorgeschilderten Lösung ist, daß keine zusätzlichen energieverbrauchenden Antriebe eingesetzt werden müssen.

Grundsätzlich sind für die Abstützung des Riemens Zahnräder oder Walzen denkbar, wobei Zahnräder bevorzugt sind, da bei hohen Geschwindigkeiten durch das Anschlagen der Zähne des Zahnriemens gegen die glatte Oberfläche einer Walze Geräusche entstehen.

Der Abstand der Unterstützungspunkte der Riemen muß unter Berücksichtigung der Maße und Gewichte des Fördergutes hinreichend kurz gewählt werden, um ihr Durchhängen zu vermeiden. Ansonsten wäre eine Störung des Transportes die Folge, falls die transportierten Stücke die Aufnahmeleisten berühren. Erfolgt die Abstützung ausschließlich durch Räder oder Walzen, so ist ein hoher mechanischer Aufwand zur Führung der Riemen das nachteilige Ergebnis. Daher wird vorgeschlagen, den Abstand der Walzen zu vergrößern und zwischen ihnen Führungsleisten anzuordnen, auf denen der Riemen aufliegt und durch die er gegebenenfalls auch seitlich geführt wird. Zweckmäßig ist insbesondere, nur am Beginn und Ende eines Gestells eine Walze vorzusehen, während in seinem Zentrum der Riemen über Führungsschienen verläuft. Auf diese Weise ist das Transportband in seiner Herstellung erheblich preiswerter.

Um einen erhöhten Kraftaufwand durch Reibungsverluste zu vermeiden, ist eine leichtgängige Beweglichkeit des Riemens in den Führungsleisten notwendig. Zu diesem Zweck hat die Führungsbahn bevorzugt eine Oberfläche, die aus einem hochgleitfähigen Material besteht. Geeignet ist beispielsweise ultra hochmolekulares Polyäthylen (PE-UHM).

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung näher erläutert wird. Es zeigen in schematischer Darstellung:
- Figur 1: perspektivische Ansicht der Transportbahn von schräg oben

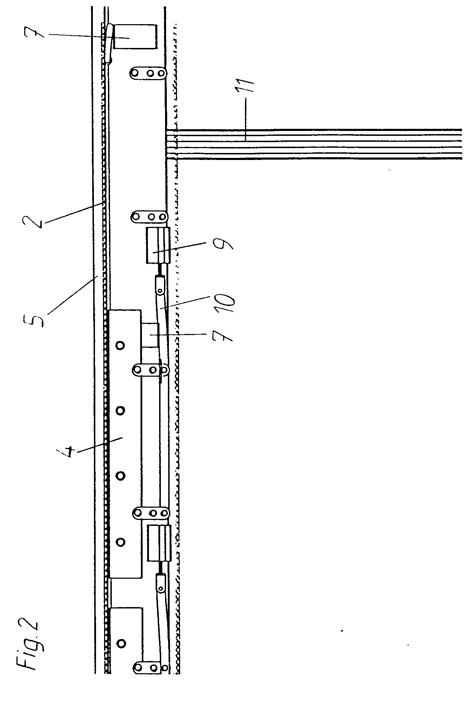

- Figur 2: Seitenansicht der Transportbahn parallel zur Förderrichtung
- Figur 3: Querschnitt der Transportbahn senkrecht zur Förderrichtung

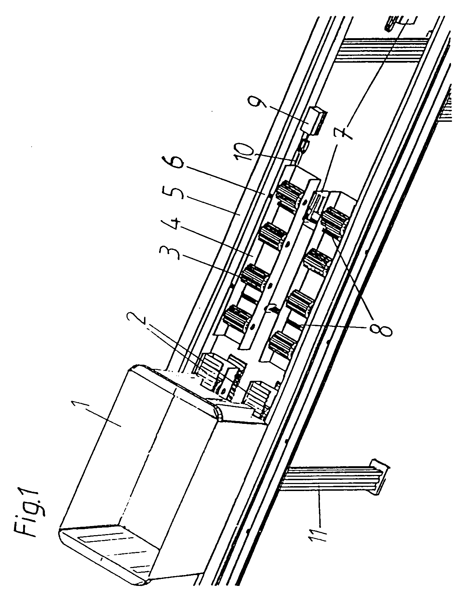

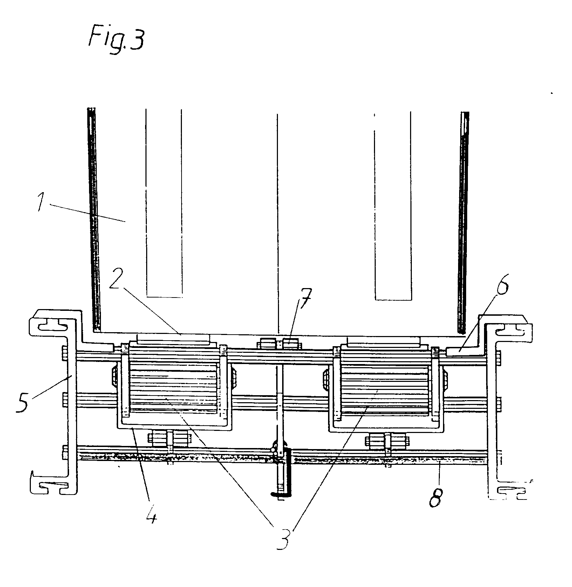

In den Figuren 1 und 3 ist ein Stückgut (1) in Form eines Transportbehälters wiedergegeben, der auf zwei parallel verlaufenden Zahnriemen (2) steht. Die Zahnriemen (2) werden durch einen Antrieb über Zahnräder bewegt (nicht dargestellt). Die übrigen Zahnräder (3) dienen als Abstützung des Zahnriemens (2) und sind in Gestellen (4) drehbar befestigt. Jedes Gestell (4) hat eine bestimmte Länge und beinhaltet für jeden der beiden Zahnriemen (2) vier Zahnräder (3).

Die Transportbahn ist durch zwei parallel verlaufende Schienen (5) begrenzt, an denen die in die Transportbahn hineinragenden Aufnahmeleisten (6) befestigt sind. In der Transportphase beschreiben die Zahnriemen (2) eine Ebene, die oberhalb der durch die Aufnahmeleisten (6) beschriebenen liegt, so daß das Stückgut (1) problemlos über sie hinwegbewegt werden kann. In der durch Absenken des Gestells (4) eingenommenen Bremsphase wird der Zahnriemen (2) so weit abgesenkt, daß das Stückgut (1) auf den Aufnahmeleisten (6) aufsitzt.

Zwischen den beiden Gestellhälften befinden sich in der Mitte der Transportbahn mechanische Taster (7), die betätigt werden, wenn das Stückgut (1) über sie hinwegfährt. Die Gestelle (4) sind über senkrecht zu der Transportrichtung verlaufende, waagrechte Rohre mit den Schienen (5) verbunden, wobei ein Hebelmechanismus die Absenkvorrichtung (8) darstellt, welche durch einen Pneumatikzylinder (9) über ein Gestänge (10) angetrieben wird. Die ganze Anordnung wird von Stelzen (11) gehalten, an denen die Schienen (5) befestigt sind.

## Patentansprüche

1. Transportbahn für Stückgüter und Paletten zur staudrucklosen Förderung, bestehend aus einer mit einem Antrieb versehenen Fördervorrichtung, die Stückgüter fortbewegen kann, und einer Abbremsvorrichtung, die die Förderung in einem bestimmten Bremsabschnitt der Transportbahn bei Aktivierung eines diesem Bremsabschnitt zugeordneten Sensors, insbesondere eines mechanischen Tasters, unterbinden kann, wobei die Transportbahn zumindest im Bereich von Gestelle (4) fortlaufende Aufnahmeleisten (6) in einer solchen Höhe aufweist, daß das Stückgut (l) im abgesenkten Zustand des Gestells (4) aufsitzt und im angehobenen Zustand einen Abstand zu den Aufnahmeleisten (6) aufweist und die Abbremsvorrichtung bei Aktivierung des Sensors die Gestelle (4) des Bremsabschnittes absenkt und die Fördervorrichtung drehbare Walzen aufweist, die zumindest teilweise mit dem Antrieb in Verbindung stehen, **dadurch gekennzeichnet,** daß
- die Fördervorrichtung mindestens einen in Förderrichtung verlaufenden Zahnriemen aufweist,
- die Walzen abschnittsweise in den einzelnen, absenkbaren Gestellen (4) untergebracht sind,
- die angetriebenen Walzen Zahnräder sind und
- der Sensor aktiviert ist, solange sich ein Stückgut in einem mindestens um die Länge des Stückgutes beabstandeten, in Förderrichtung nachfolgenden Steuerabschnitt der Transportbahn befindet.

2. Transportbahn nach Anspruch 1, **dadurch gekennzeichnet,** daß die nicht angetriebenen Walzen Zahnräder (3) sind.

3. Transportbahn nach einem der Ansprüche 1 bis 2, **dadurch gekennzeichnet,** daß sich über einen Bremsabschnitt jeweils nur ein Gestell (4) erstreckt.

4. Transportbahn nach einem der Ansprüche 1 bis 3, **dadurch gekennzeichnet,** daß die Absenkung der Gestelle (4) in einer Schwenkbewegung geschieht, wobei sich die Drehachse an einem Ende des Gestells (4) befindet.

5. Transportbahn nach einem der Ansprüche 1 bis 4, **dadurch gekennzeichnet,** daß die Gestelle (4) derart abgesenkt werden, daß während der Absenkung eine annäherungsweise parallele Ausrichtung zur Transportbahn beibehalten bleibt.

6. Transportbahn nach einem der Ansprüche 1 bis 5, **dadurch gekennzeichnet,** daß das Anheben der Gestelle (4) durch einen in den Zahnriemen (2) eingreifende Bolzen erfolgt, der die translatorische Bewegung des Zahnriemens (2) in eine Schwenkbewegung umsetzt und hierbei das Gestell (4) aufwärts bewegt.

7. Transportbahn nach einem der Ansprüche 1 bis 6, **dadurch gekennzeichnet,** daß als Antrieb für das Anheben des Gestells (4) über ein Hebelgestänge einwirkende pneumatische oder elektrische Zylinder dienen.

8. Transportbahn nach einem der Ansprüche 1 bis 7, **dadurch gekennzeichnet,** daß das Anheben des Gestells (4) durch Eingriff in den Riemen und/oder durch Nutzung des Gewichts des Fördergutes erfolgt.

9. Transportbahn nach einem der Ansprüche 1 bis 8, **gekennzeichnet durch** Walzen oder zusätzliche Zahnräder (3), die den Riemen abstützen und sich innerhalb und/oder außerhalb der Gestelle (4) befinden.

10. Transportbahn nach einem der vorhergenden Ansprüche, **dadurch gekennzeichnet,** daß die Riemen zwischen den Walzen in Führungsleisten verlaufen.

11. Transportbahn nach Anspruch 10, **dadurch gekennzeichnet,** daß die Führungsleisten eine Oberfläche aus hochgleitfähigem Material aufweisen.

## Claims

1. Conveyor for unit loads and palettes for dynamic pressure-free conveyance, consisting of a conveyor device provided with a drive, which can move unit loads, and a braking device which can prevent conveyance in a specific braking section of the conveyor upon activation of a sensor (in particular a mechanical feeler) assigned to this braking section, the conveyor having at least in the region of mounts (4) continuous receiving guide rails (6) at such a height that unit load (1) rests thereupon when mounts (4) are in a lowered condition and in a lifted condition is at a distance to receiving guide rails (6) and the braking device, upon activation of the sensor, lowers mounts (4) of the braking section and the conveyor device has rotatable rollers which are connected to the drive at least partially, **wherein**
- the conveyor device has at least one toothed belt extending in the direction of transport,
- the rollers are disposed section-wise in the individual, lowerable mounts (4) in such a way so as to be rotatable,
- the driven rollers are toothed wheels and
- the sensor is activated for as long as a unit load is located in a control section of the conveyor following in the direction of transport which comprises at least the length of the unit load.

2. Conveyor according to claim 1, **wherein** the rollers that are not driven are toothed wheels (3).

3. Conveyor according to one of claims 1 to 2, **wherein** only one mount (4) extends across one braking section.

4. Conveyor according to one of claims 1 to 3, **wherein** the lowering of mounts (4) is done in a swivel movement where the rotation ads is located at one end of mount (4).

5. Conveyor according to one of claims 1 to 4, **wherein** mounts (4) can be lowered in such a way that during lowering an approximately parallel orientation in relation to the conveyor is retained.

6. Conveyor according to one of claims 1 to 5, **wherein** the lifting of mounts (4) is effected by a pin which engages with toothed belt (2) which translates the translatory movement of toothed belt (2) into a swivel movement and thereby moves mount (4) upwards.

7. Conveyor according to one of claims 1 to 6, **wherein** pneumatic or electric cylinders serve as a drive for lifting mount (4) via a leverbar.

8. Conveyor according to one of claims 1 to 7, **wherein** the lifting of mount (4) is effected through engagement with the belt and/or through utilisation of the weight of the goods to be transported.

9. Conveyor according to one of the claims 1 to 8, **wherein** rollers or additional toothed wheels (3) support the belt and are located within and/or outside of mount (4).

10. Conveyor according to one of the preceding claims, **wherein** said belts extend between the rollers in guide rails.

11. Conveyor according to claim 10, **wherein** said guide rails have a surface of high gliding ability.

## Revendications

1. Convoyeur pour marchandises de détails et palettes, destiné au transport sans accumulation, composé d'un système de transport doté d'un dispositif d'entraînement qui déplace les marchandises, et d'un dispositif de freinage qui interrompt l'acheminement sur une section de freinage déterminée du convoyeur lorsqu'un capteur correspondant à cette section, notamment une touche mécanique, est activé(e), et renfermant des baguettes (6) continues, au moins au niveau des berceaux (4), la hauteur de ces baguettes (6) étant telle que la marchandise (1) repose dessus lorsque le berceau (4) est descendu et qu'il y ait un espace entre la marchandise (1) et les baguettes (6) lorsqu'il est remonté, le dispositif de freinage provoquant la descente du berceau (4) sur la section de freinage lorsque le capteur est activé et le système de transport étant pourvu de rouleaux rotatifs, dont une partie au moins est solidaire de l'entraînement, **caractérisé en ce que**
- le système de transport possède au moins une courroie trapézoïdale dentée se déplaçant dans le sens de la marche,
- les rouleaux rotatifs sont logés par tranches dans les différents berceaux (4),
- les rouleaux entraînés sont des roues dentées et
- le capteur est activé tant qu'une marchandise se trouve dans la section de commande suivante du convoyeur dans le sens de la marche, située à une distance au moins égale à la longueur de la marchandise.

2. Convoyeur selon la revendication 1, **caractérisé en ce que** les rouleaux non entraînés sont des roues dentées (3).

3. Convoyeur selon la revendication 1 ou 2, **caractérisé en ce qu'il** n'y a qu'un berceau (4) dans une section de freinage

4. Convoyeur selon la revendication 1 ou 3, **caractérisé en ce que** la descente des berceaux (4) est un mouvement de pivotement, l'axe de rotation se trouvant à une extrémité du berceau (4).

5. Convoyeur selon l'une des revendications 1 à 4, **caractérisé en ce que** la descente des berceaux (4) est exécutée de telle sorte qu'ils restent approximativement parallèles au convoyeur pendant qu'ils s'abaissent.

6. Convoyeur selon l'une des revendications 1 à 5, **caractérisé en ce que** la montée des berceaux (4) est assurée à l'aide d'un doigt qui s'engrène dans la courroie trapézoïdale dentée (2) et de ce fait, transforme le mouvement de translation de la courroie dentée (2) en un pivotement et fait en même temps remonter le berceau (4).

7. Convoyeur selon l'une des revendications 1 à 6, **caractérisé en ce que** l'entraînement du berceau (4) est assuré au moyen de vérins pneumatiques ou électriques agissant par l'intermédiaire d'un bras de lever

8. Convoyeur selon l'une des revendications 1 à 7, **caractérisé en ce que** la montée du berceau (4) est assurée par l'engrenage dans la courroie trapézoïdale dentée et/ou en exploitant le poids de la marchandise transportée.

9. Convoyeur selon l'une des revendications 1 à 8, **caractérisé en ce qu'il comporte** des rouleaux ou des roues dentées (3) supplémentaires qui soutiennent la courroie et se trouvent à l'intérieur et/ou à l'extérieur des berceaux (4).

10. Convoyeur selon l'une des revendications précédentes, **caractérisé en ce qu**e les courroies se trouvent entre les rouleaux dans les baguettes de guidage.

11. Convoyeur selon la revendication 10, **caractérisé en ce que** la surface des baguettes de guidage est réalisée dans un matériau très glissant.
